# EUROPEAN PATENT APPLICATION

(11) **EP 1 749 844 A1**
(43) Date of publication of application: **07.02.2007**
(21) Application number: 05016790.7
(22) Date of filing: 02.08.2005
(51) Int. Cl.: C08G 18/10, C08G 18/48

(54) **Modified hydrophilic polyurethane memory foam, application and manufacturing method thereof**

(71) Applicant: Lin, I-Sioun, Bedford MA 01730 (US)
(72) Inventor: Lin, I-Sioun, Bedford, MA 01730 (US); Yao, Meng-Ping, Sinpu Township Hsinchu County 305 (TW)
(74) Representative: Becker Kurig Straus

(57) **Abstract**

A manufacturing method of modified hydrophilic Polyurethane memory foam and products thereof are disclosed. The starting material of the foam includes hydrophilic PU prepolymer, acrylic emulsion polymer and second polyether polyol. The hydrophilic PU prepolymer consists of a first polyether polyol and isocyanate. The molecular weight of the first polyether polyol ranges from 600 to 2000 and the first polyether polyol contains at least 40 mole% of -EO- where the content of the -EO- ranges from 20 to 99.9 wt%. The foaming agent is carbon dioxide produced by the reaction of isocyanate and the water. After foaming process, there is a heating step for dehydration. The foam has specific high hydrophilic polymer structure with features of shock absorbing, uniform pressure relief, moisture absorbency and heat absorbing so as to provide users dry and cool feelings. It wouldn't become rigid below 10 degrees Celsius.

## Description

### BACKGROUND OF THE INVENTION

### 1. Field of the Invention

The present invention relates to a manufacturing method of a modified hydrophilic PU (Polyurethane) memory foam and products thereof, especially to a hydrophilic PU memory foam with features of good shock absorbing, uniform pressure relief, moisture absorbency, heat absorbing, low temperature resistance and non-toxicity that are applied to pillows, medical beds, cushions of office chairs, mattress, toys, insoles and linings of shoes for better effects.

### 2. Description of the Related Art

Conventional non-hydrophilic PU (Polyurethane) memory foam has been applied broadly to pillows, medical beds, cushions of office chairs, mattress, and shoes. There is memory foam with feature of uniform pressure relief available on the market now. The conventional non-hydrophilic PU memory foam is made by mixing 0.5 to 90 wt% of polyether polyol with 2 to 60 wt% isocyanate homogeneously under the room temperature. The PU memory foam is foamed by the mixture of polyether polyol and isocyanate by using MC (methylene chloride, CH₂Cl₂) or carbon dioxide, which is generated upon reaction of the isocyanate and the water, as a foaming agent in a mold. The mold is, for example, used for producing a plurality of products such as pillows, medical beds, cushions of office chairs, mattress, and shoes. The temperature of the mold is controlled between 30°C to 50°C while the foaming time is about 5 to 10 minutes so as to produce the foam. About seven years ago, a US company Frisby Technologies has developed a technique to add micro encapsulated particles into foam and fabric for insulating heat and making user feel cooler. However, the effect of thermal insulating of the additive is not as good as expected, sometimes there is even no differences between products with or without micro encapsulation particles. The conventional non-hydrophilic PU memory foam has following shortcomings due to defects on composition of materials or manufacturing process:
1. Conventional non-hydrophilic PU memory foam is not hydrophilic so that it hasn't features of moisture absorbency and heat absorbing. While contacting humans, moisture and heat from skin within contact area can't be dissipated efficiently so that causes the accumulation of heat and moisture. The contact area can't keep dry and cool thus users may feel uncomfortable.
2. Although conventional non-hydrophilic PU memory foam is quite soft but it is without low temperature resistance. Thus it is sensitive to temperature. For example, below 10 degrees Celsius, it is getting harder while it may be as hard as wood when the ambient temperature is below 5 degrees Celsius. Thus in a cold climate, the ambient temperature should be heated after a period of time in order to keep the temperature above certain degrees. Due to the restriction of ambient temperature, the applications of non-hydrophilic PU foam have clear disadvantages.
3. The oxidation resistance and hydrolysis resistance of conventional memory foam are poor, thus it has negative effects on service life of the foam.
4. After reaction, conventional non-hydrophilic PU memory foam contains high concentration of TDA (Toluene diamine) or MDA (Methylene diphenyl diamine) that have toxicity problems. Moreover, the residual amine catalyst inside the foam has unpleasant smell so that it is not suitable to be applied to pillows, mattress, or chair cushions. Furthermore, general latex foam is not durable and is easy to breakdown and become small particles because of oxidation or contact with perfume or alcohol.

Therefore, applications of conventional non-hydrophilic PU memory foam on pillows, medical beds or mattress can't meet users demands and requirements on quality, functions and comfort.

### SUMMARY OF THE INVENTION

It is a primary object of the present invention to provide a modified hydrophilic PU memory foam that contains 1 to 70 wt% of hydrophilic PU prepolymer, 1 to 50wt% of acrylic emulsion polymer, and 1 to 50wt% of a second polyether polyol while a preferred embodiment has 40 to 60wt% of the hydrophilic PU prepolymer, 10 to 20 wt% of the acrylic emulsion polymer, and 5 to 20 wt% of the second polyether polyol. The hydrophilic PU prepolymer consists of 1 to 80wt% of a first polyether polyol and 1 to 70 wt% of isocyanate while a preferred embodiment having 40 to 70 wt% of the first polyether polyol and 30 to 60 wt% of isocyanate. The molecular weight of the first polyether polyol ranges from 600 to 2000 and the first polyether polyol contains at least 40 mole% of -EO- while the content of the -EO- ranges from 20 to 99.9 wt%. The foaming agent is carbon dioxide produced by the reaction of isocyanate with lots of water and there is no need to use other foaming agents. After foaming process, the foam has specific hydrophilic polymer structure with features of shock absorbing, uniform pressure relief, moisture absorbency and heat absorbing so as to provide users dry and cool feelings and thus the comfort and applications of the PU foam are also increased.

It is another object of the present invention to provide modified hydrophilic PU memory foam that has features of moisture absorbency and heat absorbing. Due to the specific components, the foam has excellent temperature resistance so that it won't get hard below 10 degrees Celsius so that the range of ambient temperature for applications of the PU foam is enlarged.

It is a further object of the present invention to provide modified hydrophilic PU memory foam that uses carbon dioxide produced by the reaction of isocyanate with lots of water as a foaming agent. Thus there is no need to add other foaming agents and there is no residual TDA, MDA and amine catalyst inside the foam so that the produced foam is nonpoisonous. On the contrast, the disadvantages of conventional non-hydrophilic PU foam is associated with high concentration of residual TDA, MDA, or amine catalyst that may cause bad smell, less applications, and negative effects on comfort and safety of the related products.

It is a further object of the present invention to provide modified hydrophilic PU memory foam that includes micro encapsulated particles that increase the temperature control capability of the foam by its physical effects.

It is still a further object of the present invention to provide a manufacturing method of modified hydrophilic PU memory foam that the starting material are foaming into products and the products are heated under high temperature condition (ranges from 50 to 100 degrees Celsius) for dehydration.

It is still further object of the present invention to provide an application of modified hydrophilic PU memory foam for producing pillow, cushion, toy, mattress insoles or lining of shoes.

### BRIEF DESCRIPTION OF THE DRAWINGS

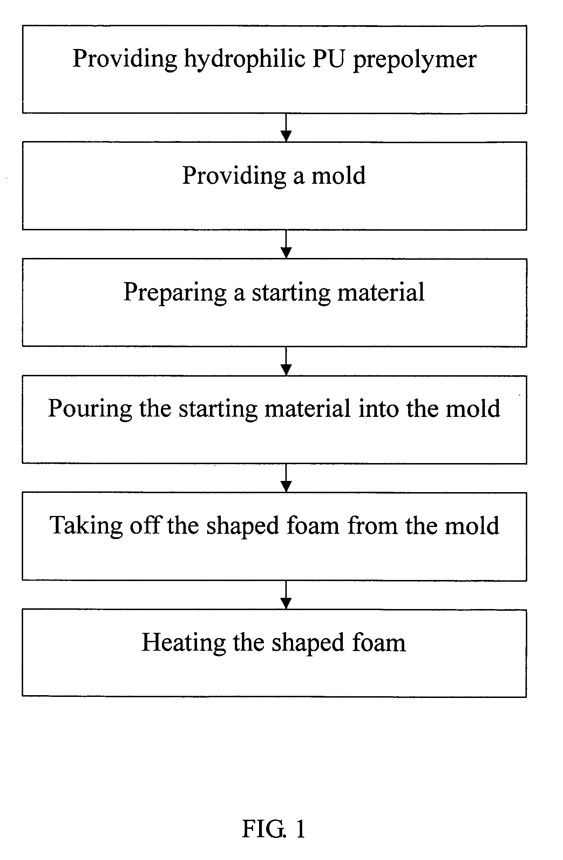

Fig. 1 is a block diagram of manufacturing process of modified hydrophilic PU memory foam according to the present invention.

### DETAILED DESCRIPTION OF THE INVENTION

Modified hydrophilic PU memory foam in accordance with the present invention is foamed by a starting material. The starting material comprises 1 to 70 wt% of a hydrophilic PU prepolymer, 1 to 50 wt% of an acrylic emulsion polymer, and 1 to 50 wt% of a second polyether polyol. The hydrophilic PU prepolymer consists of 1 to 80wt% of a first polyether polyol and 1 to 70 wt% of isocyanate. The molecular weight of the first polyether polyol ranges from 600 to 2000 and the first polyether polyol contains at least 40 mole% of -EO- while the content of the -EO- ranges from 20 to 99.9 wt%. The foaming agent is carbon dioxide produced by the reaction of isocyanate with lots of water. During the foaming process, there is no need to add any other foaming agents. After the foam has been formed inside the mold, remove it out and go through a heating process under temperature ranges from 50 to 100 degrees Celsius for dehydration. Thus the manufacturing process of the modified hydrophilic PU foam has been completed.

The above-mentioned isocyanate can be TDI (Toluene Diisocyanate), MDI (Methylene Diphenyl Diisocyanate), IPDI (Isophorone Diisocyanate), or mixtures of above chemicals. It reacts with the first polyether polyol so as to produce the hydrophilic PU prepolymer. The molecular weight of the first polyether polyol is between 600 and 2000 while ranging from 600 to 1500 is preferred. The content of the -EO- therein ranges from 20 to 99.9 wt%.

In practice, the modified hydrophilic PU memory foam can also be produced by one-shot technique without the process for preparing the prepolymer. The isocyanate is mixed with the first polyether polyol, the acrylic emulsion polymer, the second polyether polyol, surfactant and catalyst in certain weight ratio directly to produce foam inside the mold.

The Acrylic Emulsion polymer mentioned above is polymerized from acrylic, vinyl acrylic or styrene acrylic.

The following embodiments explain components of the starting material of the memory foam and physical properties such as softness, recovery time, temperature resistance or applications of the memory foam of the present invention. The prepolymer inside the following embodiments are produced by reaction between TDI (Toluene Diisocyanate) and the first polyether polyol.

### Embodiment 1

| Components | weight unit | weight percent |
|---|---|---|
| H₂O | 19.6 | 32.67 |
| Acrylic Emulsion polymer | 10 | 16.67 |
| Surfactant B | 0.4 | 0.67 |
| PU prepolymer | 30 | 50 |
| Total | 60 | 100 |

The surfactant B can be products of German company-BASF such as Pluronic 61, 62, 64 or 101, products of US company-AIR PRODUCTS such as LK443, DC-198, or DC504, or products of German company-TH. Goldschmidt such as LH525 and LK260.

### Features:

The present invention has strong tensile strength, tear resistance, moisture absorbency and heat absorbing and the recovery time ranges from 1 to 5 seconds. The foam is applied to various products such as pillows, medical beds, cushions of office chairs, mattress, toy, insoles or lining of shoes while cushions and mattress are preferred applications.

The followings are data of physical properties:

| | | |
|---|---|---|
| Density (g/cm³) | 0.148 | 0.189 |
| Texture | fine and soft | fine and soft |
| Recovery Time (sec) | 3 | 2 |
| Breath Ability | good | good |
| Tensile Strength (kg/cm²) | 1.44 | 1.47 |
| Elongation (%) | 323 | 390 |
| Tear Resistance (kg/cm) | 0.79 | 1.52 |
| Water Absorbency* (wet/dry) | 12 | 7.7 |
| Permanent Deformation Rate** (22 hrs/50°C) | 19.01 | 8.58 |

| | | |
|---|---|---|
| * Water Absorbency: weight after absorbing water/ weight before absorbing water ** Permanent Deformation Rate: tested under conditions of ASTM D395, method B and 50% compression. | | |

### Embodiment two

| Components | weight unit | weight percent |
|---|---|---|
| H₂ O | 14.6 | 24.33 |
| Acrylic Emulsion polymer | 10 | 16.67 |
| Surfactant A | 5 | 8.33 |
| Surfactant B | 0.4 | 0.67 |
| PU prepolymer | 30 | 50 |
| Total | 60 | 100 |

The surfactant A can be products of ICI America company- such as Brig 93 or products of Henktel Company such as Emulgale 1000 NI.

### Features:

This embodiment is softer than the above embodiment while the recovery time ranges from 1 to 5 seconds. It has moisture absorbency and heat absorbing. The foam is applied to various products such as pillows, medical beds, cushions of office chairs, mattress, toy, insoles or lining of shoes while pillows, cushions and mattress are preferred. The followings are data of physical properties:

| | | | | | |
|---|---|---|---|---|---|
| Density (g/cm³) | | 0.144 | | | |
| Texture | | Fine and soft | | | |
| Recovery Time (sec) | Temperature | 25°C | 36°C | 42°C | 48°C |
| | Time | 1 | 5 | 15 | 18-20 |
| Breath Ability | | Excellent | | | |
| Tensile Strength (kg/cm²) | | 4.27 | | | |
| Elongation (%) | | 304 | | | |
| Tear Resistance (kg/cm) | | 0.92 | | | |
| Water Absorbency* (wet/dry) | | 11.6 | | | |
| Permanent Deformation Rate** (22 hrs/50°C) | | | | | |

### Embodiment three

| Components | weight unit | weight percent |
|---|---|---|
| H₂O | 7 | 12.24 |
| Acrylic Emulsion polymer | 7 | 12.24 |
| Surfactant A | 7.1 | 12.42 |
| Surfactant B | 0.14 | 0.24 |
| amine catalyst I | 0.07 | 0.12 |
| amine catalyst II | 0.07 | 0.12 |
| second polyether polyol A | 7.21 | 12.62 |
| PU prepolymer | 28.59 | 50 |
| Total | 57.18 | 100 |

The molecular weight of the second polyether polyol A is between 50 and 600 while ranging from 50 to 400 is preferred. The content of the -EO- therein ranges from 20 to 99.9 wt% while from 50 to 85 wt% is preferred. The second polyether polyol A can be PEG (Polyoxyethylene glycol) 200, PEG 600, Ethylene glycol, Diethylene glycol, Propylene glycol, Glycerol, 1,4-butandiol, 1,5-pentandiol, 1,6-hexandiol, polytetrahydrofuran 250 or a mixture thereof. The amine catalyst I can be products of US company-AIR PRODUCTS such as Dabco 33LV or Dabco DMEA while the amine catalyst II can be products of US company-AIR PRODUCTS such as Dabco BL-11, Dabco BL-19 or Dabco BL-22, products of US company-HUNTSMAN such as ZF-20, ZR-70 or DMP.

### Features:

The foam is more soft than embodiment two but with problem of shrinkage. The recovery time is between 1 and 10 seconds. This embodiment is applied to various products such as pillows, medical beds, cushions of office chairs, mattress, toy, insoles or lining of shoes while pillows, cushions and mattress are preferred.

### Embodiment four

| Components | weight | weight percent |
|---|---|---|
| H₂ O | 7 | 10.18 |
| Acrylic Emulsion polymer | 7 | 10.18 |
| Surfactant A | 10 | 14.50 |
| Surfactant B | 0.14 | 0.2 |
| amine catalyst I | 0.12 | 0.17 |
| amine catalyst II | 0.10 | 0.14 |
| second polyether polyol B | 10 | 14.50 |
| PU prepolymer | 34.36 | 50 |
| Total | 68.72 | 100 |

The molecular weight of the second polyether polyol B is between 50 and 600 while ranging from 50 to 400 is preferred. The content of the -EO- therein ranges from 20 to 99.9 wt% while from 50 to 85 wt% is preferred. The second polyether polyol B can be PEG 300, Ethylene glycol, Diethylene glycol, Propylene glycol, Glycerol, 1,4-butandiol, 1,5-pentandiol, 1,6-hexandiol, polytetrahydrofuran 250 or a mixture thereof.

### Features:

The foam is as soft as embodiment three but without shrinkage problem. The recovery time ranges from 1 to 10 seconds. This embodiment is applied to various products such as pillows, medical beds, cushions of office chairs, mattress, toy, insoles or lining of shoes while pillows, cushions and mattress are preferred. The data of physical properties is as following:

| | |
|---|---|
| Density (g/cm³) | 0.145 |
| Softness (under -15°C) | soft |
| Recovery Time (sec) | 5-10 |
| Breath Ability | good |
| Tensile Strength (kg/cm²) | 0.158 |
| Elongation (%) | 140 |
| Tear Resistance (kg/cm) | 0.315 |
| Water Absorbency* (wet/dry) | 6.3 |

### Embodiment five

| Components | weight | weight percent |
|---|---|---|
| H₂ O | 7 | 9.77 |
| Acrylic Emulsion polymer | 7 | 9.77 |
| Surfactant A | 7.1 | 9.92 |
| Surfactant B | 0.14 | 0.20 |
| amine catalyst I | 0.07 | 0.10 |
| amine catalyst II | 0.07 | 0.10 |
| second polyether polyol C | 14.42 | 20.14 |
| PU prepolymer | 35.80 | 50 |
| Total | 71.60 | 100 |

The molecular weight of the second polyether polyol C is between 50 and 600 while ranging from 50 to 400 is preferred. The content of the -EO- therein ranges from 20 to 99.9 wt% while ranging from 50 to 85 wt% is preferred. The second polyether polyol C can be PEG 400, Ethylene glycol, Diethylene glycol, Propylene glycol, Glycerol, 1,4-butandiol, 1,5-pentandiol, 1,6-hexandiol, polytetrahydrofuran 250, or a mixture thereof.

### Features:

The foam is as soft as embodiment three but without shrinkage problem. And the recovery time ranges from 1 to 20 seconds. This embodiment is applied to various products such as pillows, medical beds, cushions of office chairs, mattress, toy, insoles or lining of shoes while pillows are preferred.

### Embodiment six

| Components | weight | weight percent |
|---|---|---|
| H₂O | 7 | 11.51 |
| Acrylic Emulsion polymer | 7 | 11.51 |
| Surfactant A | 7.1 | 11.68 |
| Surfactant B | 0.14 | 0.23 |
| amine catalyst I | 0.07 | 0.11 |
| amine catalyst II | 0.07 | 0.11 |
| second polyether polyol B | 3.61 | 5.94 |
| second polyether polyol C | 5.41 | 8.90 |
| PU prepolymer | 30.40 | 50 |
| Total | 60.80 | 100 |

### Features:

The foam is as soft as embodiment three but without shrinkage problem. And the recovery time ranges from 1 to 10 seconds. This embodiment is applied to various products such as pillows, medical beds, cushions of office chairs, mattress, toys, insoles or lining of shoes while pillows, cushions and mattress are preferred.

### Embodiment seven

| components | weight | weight percent |
|---|---|---|
| Acrylic Emulsion polymer | 8 | 14.1 |
| Surfactant A | 12 | 21.2 |
| Surfactant B | 0.12 | 0.21 |
| amine catalyst I | 0.12 | 0.21 |
| amine catalyst II | 0.12 | 0.21 |
| second polyether polyol B | 8 | 14.1 |
| PU prepolymer | 28.36 | 50 |
| Total | 56.72 | 100 |

### Features:

The foam is as soft as embodiment three but without shrinkage problem. And the recovery time ranges from 1 to 10 seconds. This embodiment is applied to various products such as pillows, medical beds, cushions of office chairs, mattress, toys, insoles or lining of shoes.

Refer to Fig. 1, the manufacturing method of modified hydrophilic PU memory foam in accordance with the present invention includes the following steps:
Step 1: Hydrophilic PU prepolymer is provided. It consists of 1 to 80 wt% of a first polyether polyol and 1 to 70 wt% of isocyanate. The molecular weight of the first polyether polyol is between 600 and 2000 and the first polyether polyol contains at least 40 mole% of -EO- while the content of the -EO- ranges from 20 to 99.9 wt%.
Step 2: Molds for producing various products such as pillows, cushions, mattress, toys, insoles or lining of shoes are provided.
Step 3: A starting material is mixed in a high speed mixer (above 2000rpm) by 1 to 70 wt% of the hydrophilic PU prepolymer, 1 to 50 wt% of an acrylic emulsion polymer, 1 to 50 wt% of a second polyether polyol, a predetermined amount of water, a surfactant, an amine catalyst and micro encapsulation particles under a temperature between 5 and 50 degrees Celsius. The melting point of the micro encapsulation particles is 28.3 degrees Celsius.
Step 4: The starting material is poured into the mold at a temperature of 30 to 50 degrees Celsius to proceed with foaming process for about 5 to 10 minutes. The weight of the hydrophilic PU prepolymer is between 33.3% and 66.7%, while 50% is preferred, of that of the starting material.
Step 5: After foaming process is complete, shaped foam is removed from the mold.
Step 6: The shaped foam is heated in an oven to dehydrate the foam or remove excess water from the foam under 50 to 100 degrees Celsius. The heating time depends on size and weight of the shaped foam.

There is no heating process in the conventional process for producing memory foam. Because conventional foam is non-hydrophilic, there is no need to dehydrate it. In fact, it's one of the features of the present invention to apply the hydrophilic PU memory foam to produce pillow, cushion, toy, mattress, insoles or lining of shoes.

The hydrophilic PU prepolymer in above manufacturing process consists of first polyether polyol and isocyanate mixed in a certain ratio. The PU prepolymer is prepared by above step 1. According to modem chemistry technique, the PU prepolymer can also be prepared by "one-shot technique" that integrates step 1 with step 3. That is, Isocyanate such as TDI (Toluene Diisocyanate) or MDI (Methylene diphenyl diisocyanate) is mixed with polyether polyol such as PEG 600, amine catalyst, surfactant, chain extender, water and acrylic emulsion polymer in adequate ratio to form a starting material. The starting material is then poured into the mold for the above-mentioned foaming process. It is not necessary to prepare PU prepolymer through general preparing process.

Besides, the manufacture method according to an alternative embodiment of this invention is to prepare a first hydrophilic PU prepolymer and a second hydrophilic PU prepolymer. The first hydrophilic PU prepolymer is polymerized by a first polyether polyol and isocyanate while the molecular weight of the first polyether polyol ranges from 600 to 2000. The second hydrophilic PU prepolymer is polymerized by a second polyether polyol and isocyanate while the molecular weight of the second polyether polyol ranges from 50 to 600. The first hydrophilic PU prepolymer and the second hydrophilic PU prepolymer are mixed with water, surfactant and amine catalyst to proceed with foaming process. Heating the shaped foam after the foaming process being completed. The manufacture method of this embodiment is also workable.

The micro encapsulated particles may or may not be added into the starting material. There is only physical reaction, not chemical reaction, between memory foam and the micro encapsulated particles so that there is no new chemical structure or chemical bond generated. Therefore, the micro encapsulated particles have no effect on features such as moisture absorbency of the foam. The modified hydrophilic PU memory foam in accordance with the present invention still has dry and cool effects without addition of micro encapsulated particles.

Compare modified hydrophilic PU memory foam according to the present invention with prior art, the present invention has following distinct effects and advantages:
1. The foam has fine texture and softness with features of moisture absorbency and heat absorbing. While contacting with human skin, the moisture and heat generated from skin have been absorbed and dissipated by the foam so as to keep cool and dry.
2. The foam of the present invention has good temperature resistance. That is, it wouldn't become rigid or hard when the temperature is blow 10 degrees Celsius. Even in minus fifteen degrees Celsius condition, the modified foam still remains soft.
3. The foam has pressure relief function.
4. The foam of the present invention is non-toxic.
5. The shortcomings of catalyst odor and skin irritation have been eliminated.

Comparison chart between the present invention and prior art:

| Features | Present invention | Prior art |
|---|---|---|
| Heat absorbing | Yes | No |
| Moisture absorbency | Excellent | No |
| Texture | Very fine cell size | Large cell size |
| Softness (hand feeling) | Excellent | Rough |
| Temperature Sensitivity | Very minor | Getting harder with decreasing of temperature (can be as hard as wood) |
| Skin Irritation | No | Yes |
| Comfort | Cool, dry | Sticky, uncomfortable |
| Toxicity | Non | High concentration of TDA&MDA |
| Odor | Non | Very strong (due to residual amine catalyst) |

Although particular embodiments of the invention have been described in detail for purposes of illustration, various modifications and enhancements may be made without departing from the spirit and scope of the invention. Accordingly, the invention is not to be limited except as by the appended claims.

## Claims

1. A modified hydrophilic PU memory foam, which is foamed by a starting material, the starting material comprising:
1 to 70 wt% of a hydrophilic PU prepolymer;
1 to 50 wt% of an acrylic emulsion polymer; and
a predetermined amount of water and a surfactant;
wherein the PU prepolymer comprises 1 to 80 wt% of a first polyether polyol and 1 to 70 wt% of isocyanate; the molecular weight of the first polyether polyol ranges from 600 to 2000 and the first polyether polyol has at least 40 mole% of -EO- where the content of the -EO- ranges from 20 to 99.9 wt%;
whereby the hydrophilic PU memory foam is foamed by the starting material by using carbon dioxide, which is generated upon reaction of the isocyanate and the water, as a foaming agent.

2. The modified hydrophilic PU memory foam as claimed in claim 1, wherein the starting material further comprises no more than 20 wt% of a micro encapsulated material.

3. The modified hydrophilic PU memory foam as claimed in claim 2, wherein the melting point of the micro encapsulated material is 28.3 degrees Celsius.

4. The modified hydrophilic PU memory foam as claimed in claim 1, wherein the starting material comprises substantially 32.67 wt% of the water, 16.67 wt% of the acrylic emulsion polymer, 0.67 wt% of the surfactant and 50 wt% of the PU prepolymer; wherein the surfactant is surfactant B.

5. The modified hydrophilic PU memory foam as claimed in claim 1, wherein the surfactant comprises a surfactant A and a surfactant B; the starting material comprises substantially 24.33 wt% of the water, 16.67 wt% of the acrylic emulsion polymer, 8.33 wt% of the surfactant A, 0.67 wt% of the surfactant B and 50 wt% of the PU prepolymer.

6. The modified hydrophilic PU memory foam as claimed in claim 1, wherein the starting material further comprises an amine catalyst and a second polyether polyol having a molecular weight ranging from 50 to 600.

7. The modified hydrophilic PU memory foam as claimed in claim 6, wherein the surfactant comprising a surfactant A and a surfactant B; the amine catalyst comprises an amine catalyst I and an amine catalyst II ; the starting material comprises substantially 12.24 wt% of the water, 12.24 wt% of the acrylic emulsion polymer, 12. 42 wt% of the surfactant A, 0.24 wt% of the surfactant B, 0.12 wt% of the amine catalyst I , 0.12 wt% of the amine catalyst II, 12.62 wt% of the second polyether polyol and 50 wt% of the PU prepolymer.

8. The modified hydrophilic PU memory foam as claimed in claim 7, wherein the content of -EO- of the second polyether polyol is within 20-99.9%; the polyether polyol is selected from the group consisting of PEG (Polyoxyethylene glycol) 200, PEG 600, ethylene glycol, diethylene glycol, propylene glycol, glycerol, 1,4-butandiol, 1,5-pentandiol, 1,6-hexandiol, polytetrahydrofuran 250, and a mixture thereof.

9. The modified hydrophilic PU memory foam as claimed in claim 6, wherein the surfactant comprising a surfactant A and a surfactant B; the amine catalyst comprises an amine catalyst I and an amine catalyst II; the starting material comprises substantially 10.18 wt% of the water, 10.18 wt% of the acrylic emulsion polymer, 14.50 wt% of the surfactant A, 0.2 wt% of the surfactant B, 0.17 wt% of the amine catalyst I , 0.14 wt% of the amine catalyst II, 14.50 wt% of the second polyether polyol and 50 wt% of the PU prepolymer.

10. The modified hydrophilic PU memory foam as claimed in claim 9, wherein the content of -EO- of the second polyether polyol is within 20-99.9%; the polyether polyol is selected from the group consisting of PEG300, ethylene glycol, diethylene glycol, propylene glycol, glycerol, 1,4-butandiol, 1,5-pentandiol, 1,6-hexandiol, polytetrahydrofuran 250, and a mixture thereof.

11. The modified hydrophilic PU memory foam as claimed in claim 6, wherein the surfactant comprising a surfactant A and a surfactant B; the amine catalyst comprises an amine catalyst I and an amine catalyst II ; the starting material comprises substantially 9.77 wt% of the water, 9.77 wt% of the acrylic emulsion polymer, 9.92 wt% of the surfactant A, 0.2 wt% of the surfactant B, 0.10 wt% of the amine catalyst I , 0.10 wt% of the amine catalyst II, 20.14 wt% of the second polyether polyol and 50 wt% of the PU prepolymer.

12. The modified hydrophilic PU memory foam as claimed in claim 11, wherein the content of -EO- of the second polyether polyol is within 20-99.9%; the polyether polyol is selected from the group consisting of PEG400, ethylene glycol, diethylene glycol, propylene glycol, glycerol, 1,4-butandiol, 1,5-pentandiol, 1,6-hexandiol, polytetrahydrofuran 250, and a mixture thereof.

13. The modified hydrophilic PU memory foam as claimed in claim 6, wherein the surfactant comprising a surfactant A and a surfactant B; the amine catalyst comprises an amine catalyst I and an amine catalyst II ; the second polyether polyol comprises a second polyether polyol B and a second polyether polyol C; the starting material comprises substantially 11.51wt% of the water, 11.51 wt% of the acrylic emulsion polymer, 11.68 wt% of the surfactant A, 0.23 wt% of the surfactant B, 0.11 wt% of the amine catalyst I , 0.11 wt% of the amine catalyst II, 5.94 wt% of the second polyether polyol B, 8.90 wt% of the second polyether polyol C and 50 wt% of the PU prepolymer; wherein the second polyether polyol B is selected from the group consisting of PEG300, ethylene glycol, diethylene glycol, propylene glycol, glycerol, 1,4-butandiol, 1,5-pentandiol, 1,6-hexandiol, polytetrahydrofuran 250, and a mixture thereof; wherein the second polyether polyol C is selected from the group consisting of PEG400, ethylene glycol, diethylene glycol, propylene glycol, glycerol, 1,4-butandiol, 1,5-pentandiol, 1,6-hexandiol, polytetrahydrofuran 250, and a mixture thereof.

14. The modified hydrophilic PU memory foam as claimed in claim 6, wherein the surfactant comprises a surfactant A and a surfactant B; the amine catalyst comprises an amine catalyst I and an amine catalyst II ; the starting material comprises substantially 14.1 wt% of the acrylic emulsion polymer, 21.2 wt% of the surfactant A, 0.21 wt% of the surfactant B, 0.21 wt% of the amine catalyst I , 0.21 wt% of the amine catalyst II, 14.1 wt% of the second polyether polyol and 50 wt% of the PU prepolymer; wherein the second polyether polyol is selected from the group consisting of PEG300, ethylene glycol, diethylene glycol, propylene glycol, glycerol, 1,4-butandiol, 1,5-pentandiol, 1,6-hexandiol, polytetrahydrofuran 250 and a mixture thereof.

15. A manufacturing method of modified hydrophilic PU memory foam comprising the steps of:
providing a hydrophilic PU prepolymer having 1 to 80 wt% of a first polyether polyol and 1 to 70 wt% of an isocyanate; wherein the molecular weight of the first polyether polyol is between 600 and 2000 and the first polyether polyol has at least 40 mole% of-EO- where the content of the -EO- ranges from 20 to 99.9 wt%;
providing a mold for producing a product selected from a group consisting of pillow, cushion, toy, mattress, insoles and lining of shoes;
preparing a starting material by mixing 1 to 70 wt% of the hydrophilic PU prepolymer with 1 to 50 wt% of an acrylic emulsion polymer, a predetermined amount of water and a surfactant under a temperature between 5 and 50 degrees Celsius;
pouring the starting material into the mold at a temperature of 30 to 50 degrees Celsius to proceed with foaming process for about 5 to 10 minutes; wherein the weight of the hydrophilic PU prepolymer is between 33.3% and 66.7% of that of the starting material;
taking off a shaped foam from the mold; and
heating the shaped foam in an oven to dehydrate the foam.

16. The method as claimed in claim 15, wherein the weight of the hydrophilic PU prepolymer is substantially 50% of that of the starting material.

17. The method as claimed in claim 15, wherein the heating temperature in the oven is between 50 and 100 degrees Celsius.

18. The method as claimed in claim 15, wherein the heating time depends on size and weight of the shaped foam.

19. The method as claimed in claim 15, wherein the starting material further comprises a second polyether polyol having a molecular weight ranging from 50 to 600.

20. The method as claimed in claim 15, wherein the starting material further comprises no more than 20 wt% of a micro encapsulated material.

21. The method as claimed in claim 15, wherein the starting material further comprises an amine catalyst.

22. A manufacturing method of modified hydrophilic PU memory foam comprising the steps of:
providing a first hydrophilic PU prepolymer having 1 to 80 wt% of a first polyether polyol and 1 to 70 wt% of an isocyanate within; wherein the molecular weight of the first polyether polyol is between 600 and 2000 and the first polyether polyol has at least 40 mole% of -EO- where the content of the -EO- ranges from 20 to 99.9 wt%;
providing a second hydrophilic PU prepolymer having 1 to 80 wt% of a second polyether polyol and 1 to 70 wt% of an isocyanate; wherein the molecular weight of the second polyether polyol is between 50 and 600 and the second polyether polyol has at least 40 mole% of -EO- where the content of the -EO- ranges from 20 to 99.9 wt%;
providing a mold for producing a product selected from a group consisting of pillow, cushion, toy, mattress, insoles and lining of shoes;
preparing an starting material by mixing 1 to 70 wt% of the first hydrophilic PU prepolymer with 1 to 50 wt% of the second hydrophilic PU prepolymer, 1 to 50 wt% of an acrylic emulsion polymer, a predetermined amount of water and a surfactant under a temperature between 5 and 50 degrees Celsius;
pouring the starting material into the mold at a temperature between 30 and 50 degrees Celsius to proceed with foaming process for about 5 to 10 minutes; wherein the weight of the first hydrophilic PU prepolymer is between 33.3% and 66.7% of that of the starting material;
taking off a shaped foam from the mold; and
heating the shaped foam in an oven to dehydrate the foam.

23. The method as claimed in claim 22, wherein the weight of the first hydrophilic PU prepolymer is substantially 50% of that of the starting material.

24. The method as claimed in claim 22, wherein the heating temperature in the oven is between 50 and 100 degrees Celsius.

25. The method as claimed in claim 22, wherein the starting material further comprises no more than 20 wt% of a micro encapsulated material.

26. The method as claimed in claim 22, wherein the starting material further comprises an amine catalyst.

27. An application of the modified hydrophilic PU memory foam as claimed in claim 1 for producing a product selected from a group consisting of pillow, cushion, mattress, toy, insoles and lining of shoes.

## Amended claims

### Amended claims in accordance with Rule 86(2) EPC.

**1.** A modified hydrophilic PU memory foam, which is foamed by a starting material, the starting material comprising:
1 to 70 wt% of a first hydrophilic PU prepolymer;
1 to 50 wt% of an acrylic emulsion polymer; and
water and a surfactant;
wherein the first PU prepolymer comprises 1 to 80 wt% of a first polyether polyol and 1 to 70 wt% of isocyanate; the molecular weight of the first polyether polyol ranges from 600 to 2000 and the first polyether polyol has at least 40 mole% of -EO- where the content of the -EO- ranges from 20 to 99.9 wt%;
wherein the starting material further comprises an amine catalyst and a second polyol having a molecular weight ranging from 50 to 400;
whereby the hydrophilic PU memory foam is foamed by the starting material by using carbon dioxide, which is generated upon reaction of the isocyanate and the water, as a foaming agent.

**2.** The modified hydrophilic PU memory foam as claimed in claim 1, wherein the starting material further comprises no more than 20 wt% of a micro encapsulated material.

**3.** The modified hydrophilic PU memory foam as claimed in claim 2, wherein the melting point of the micro encapsulated material is 28.3 degrees Celsius.

**4.** The modified hydrophilic PU memory foam as claimed in claim 1, wherein the starting material comprises substantially 32.67 wt% of the water, 16.67 wt% of the acrylic emulsion polymer, 0.67 wt% of the surfactant B and 50 wt% of the PU prepolymer; wherein the surfactant B is selected from the group consisting of Pluronic 61, 62, 64, 101 of German company-BASF, LK443, DC-198, DC504 of US company-AIR PRODUCTS, LH525 and LK260 of German company-TH. Goldschmidt.

**5.** The modified hydrophilic PU memory foam as claimed in claim 1, wherein the surfactant comprises a surfactant A and a surfactant B; the starting material comprises substantially 24.33 wt% of the water, 16.67 wt% of the acrylic emulsion polymer, 8.33 wt% of the surfactant A, 0.67 wt% of the surfactant B and 50 wt% of the PU prepolymer; wherein the surfactant A is selected from the group consisting of Brig 93 of ICI America company and Emulgale 1000 NI of Henktel Company; wherein the surfactant B is selected from the group consisting of Pluronic 61, 62, 64, 101 of German company-BASF, LK443, DC-198, DC504 of US company-AIR PRODUCTS, LH525 and LK260 of German company-TH. Goldschmidt.

**6.** The modified hydrophilic PU memory foam as claimed in claim 1, wherein the surfactant comprising a surfactant A and a surfactant B; the amine catalyst comprises an amine catalyst I and an amine catalyst II; the starting material comprises substantially 12.24 wt% of the water, 12.24 wt% of the acrylic emulsion polymer, 12. 42 wt% of the surfactant A, 0.24 wt% of the surfactant B, 0.12 wt% of the amine catalyst I, 0.12 wt% of the amine catalyst II, 12.62 wt% of the second polyol and 50 wt% of the PU prepolymer; wherein the surfactant A is selected from the group consisting of Brig 93 of ICI America company and Emulgale 1000 NI of Henktel Company; wherein the surfactant B is selected from the group consisting of Pluronic 61, 62, 64, 101 of German company-BASF, LK443, DC-198, DC504 of US company-AIR PRODUCTS, LH525 and LK260 of German company-TH. Goldschmidt; wherein the amine catalyst I is selected from the group consisting of Dabco 33LV and Dabco DMEA of US company-AIR PRODUCTS; wherein the amine catalyst II is selected from the group consisting of Dabco BL-11, Dabco BL-19, Dabco BL-22 of US company-AIR PRODUCTS, ZF-20, ZR-70 and DMP of US company-HUNTSMAN.

**7.** The modified hydrophilic PU memory foam as claimed in claim 6, wherein the content of-EO- of the second polyol is within 20-99.9%; the second polyol is selected from the group consisting of PEG (Polyoxyethylene glycol) 200, ethylene glycol, diethylene glycol, propylene glycol, glycerol, 1,4-butandiol, 1,5-pentandiol, 1,6-hexandiol, polytetrahydrofuran 250, and a mixture thereof.

**8.** The modified hydrophilic PU memory foam as claimed in claim 1, wherein the surfactant comprising a surfactant A and a surfactant B; the amine catalyst comprises an amine catalyst I and an amine catalyst II; the starting material comprises substantially 10.18 wt% of the water, 10.18 wt% of the acrylic emulsion polymer, 14.50 wt% of the surfactant A, 0.2 wt% of the surfactant B, 0.17 wt% of the amine catalyst I, 0.14 wt% of the amine catalyst II, 14.50 wt% of the second polyol and 50 wt% of the PU prepolymer; wherein the surfactant A is selected from the group consisting of Brig 93 of ICI America company and Emulgale 1000 NI of Henktel Company; wherein the surfactant B is selected from the group consisting of Pluronic 61, 62, 64, 101 of German company-BASF, LK443, DC-198, DC504 of US company-AIR PRODUCTS, LH525 and LK260 of German company-TH. Goldschmidt; wherein the amine catalyst I is selected from the group consisting of Dabco 33LV and Dabco DMEA of US company-AIR PRODUCTS; wherein the amine catalyst II is selected from the group consisting of Dabco BL-11, Dabco BL-19, Dabco BL-22 of US company-AIR PRODUCTS, ZF-20, ZR-70 and DMP of US company-HUNTSMAN.

**9.** The modified hydrophilic PU memory foam as claimed in claim 8, wherein the content of -EO- of the second polyol is within 20-99.9%; the second polyol is selected from the group consisting of PEG300, ethylene glycol, diethylene glycol, propylene glycol, glycerol, 1,4-butandiol, 1,5-pentandiol, 1,6-hexandiol, polytetrahydrofuran 250, and a mixture thereof.

**10.** The modified hydrophilic PU memory foam as claimed in claim 1, wherein the surfactant comprising a surfactant A and a surfactant B; the amine catalyst comprises an amine catalyst I and an amine catalyst II; the starting material comprises substantially 9.77 wt% of the water, 9.77 wt% of the acrylic emulsion polymer, 9.92 wt% of the surfactant A, 0.2 wt% of the surfactant B, 0.10 wt% of the amine catalyst I, 0.10 wt% of the amine catalyst II, 20.14 wt% of the second polyol and 50 wt% of the PU prepolymer; wherein the surfactant A is selected from the group consisting of Brig 93 of ICI America company and Emulgale 1000 NI of Henktel Company; wherein the surfactant B is selected from the group consisting of Pluronic 61, 62, 64, 101 of German company-BASF, LK443, DC-198, DC504 of US company-AIR PRODUCTS, LH525 and LK260 of German company-TH. Goldschmidt; wherein the amine catalyst I is selected from the group consisting of Dabco 33LV and Dabco DMEA of US company-AIR PRODUCTS; wherein the amine catalyst II is selected from the group consisting of Dabco BL-11, Dabco BL-19, Dabco BL-22 of US company-AIR PRODUCTS, ZF-20, ZR-70 and DMP of US company-HUNTSMAN.

**11.** The modified hydrophilic PU memory foam as claimed in claim 10, wherein the content of -EO- of the second polyol is within 20-99.9%; the second polyol is selected from the group consisting of PEG400, ethylene glycol, diethylene glycol, propylene glycol, glycerol, 1,4-butandiol, 1,5-pentandiol, 1,6-hexandiol, polytetrahydrofuran 250, and a mixture thereof.

**12.** The modified hydrophilic PU memory foam as claimed in claim 1, wherein the surfactant comprising a surfactant A and a surfactant B; the amine catalyst comprises an amine catalyst I and an amine catalyst II; the second polyol comprises a second polyol B and a second polyol C; the starting material comprises substantially 11.51wt% of the water, 11.51 wt% of the acrylic emulsion polymer, 11.68 wt% of the surfactant A, 0.23 wt% of the surfactant B, 0.11 wt% of the amine catalyst I, 0.11 wt% of the amine catalyst II, 5.94 wt% of the second polyol B, 8.90 wt% of the second polyol C and 50 wt% of the PU prepolymer; wherein the second polyol B is selected from the group consisting of PEG300, ethylene glycol, diethylene glycol, propylene glycol, glycerol, 1,4-butandiol, 1,5-pentandiol, 1,6-hexandiol, polytetrahydrofuran 250, and a mixture thereof; wherein the second polyol C is selected from the group consisting of PEG400, ethylene glycol, diethylene glycol, propylene glycol, glycerol, 1,4-butandiol, 1,5-pentandiol, 1,6-hexandiol, polytetrahydrofuran 250, and a mixture thereof; wherein the surfactant A is selected from the group consisting of Brig 93 of ICI America company and Emulgale 1000 NI of Henktel Company; wherein the surfactant B is selected from the group consisting of Pluronic 61, 62, 64, 101 of German company-BASF, LK443, DC-198, DC504 of US company-AIR PRODUCTS, LH525 and LK260 of German company-TH. Goldschmidt; wherein the amine catalyst I is selected from the group consisting of Dabco 33LV and Dabco DMEA of US company-AIR PRODUCTS; wherein the amine catalyst II is selected from the group consisting of Dabco BL-11, Dabco BL-19, Dabco BL-22 of US company-AIR PRODUCTS, ZF-20, ZR-70 and DMP of US company-HUNTSMAN.

**13.** The modified hydrophilic PU memory foam as claimed in claim 1, wherein the surfactant comprises a surfactant A and a surfactant B; the amine catalyst comprises an amine catalyst I and an amine catalyst II; the starting material comprises substantially 14.1 wt% of the acrylic emulsion polymer, 21.2 wt% of the surfactant A, 0.21 wt% of the surfactant B, 0.21 wt% of the amine catalyst I, 0.21 wt% of the amine catalyst II, 14.1 wt% of the second polyol and 50 wt% of the PU prepolymer; wherein the second polyol is selected from the group consisting of PEG300, ethylene glycol, diethylene glycol, propylene glycol, glycerol, 1,4-butandiol, 1,5-pentandiol, 1,6-hexandiol, polytetrahydrofuran 250 and a mixture thereof; wherein the surfactant A is selected from the group consisting of Brig 93 of ICI America company and Emulgale 1000 NI of Henktel Company; wherein the surfactant B is selected from the group consisting of Pluronic 61, 62, 64, 101 of German company-BASF, LK443, DC-198, DC504 of US company-AIR PRODUCTS, LH525 and LK260 of German company-TH. Goldschmidt; wherein the amine catalyst I is selected from the group consisting of Dabco 33LV and Dabco DMEA of US company-AIR PRODUCTS; wherein the amine catalyst II is selected from the group consisting of Dabco BL-11, Dabco BL-19, Dabco BL-22 of US company-AIR PRODUCTS, ZF-20, ZR-70 and DMP of US company-HUNTSMAN.

**14.** A manufacturing method of modified hydrophilic PU memory foam comprising the steps of:
providing a first hydrophilic PU prepolymer having 1 to 80 wt% of a first polyether polyol and 1 to 70 wt% of an isocyanate within; wherein the molecular weight of the first polyether polyol is between 600 and 2000 and the first polyether polyol has at least 40 mole% of -EO- where the content of the -EO- ranges from 20 to 99.9 wt%;
providing a second hydrophilic PU prepolymer having 1 to 80 wt% of a second polyol and 1 to 70 wt% of an isocyanate; wherein the molecular weight of the second polyol is between 50 and 400 and the second polyol has at least 40 mole% of -EO- where the content of the -EO- ranges from 20 to 99.9 wt%;
providing a mold for producing a product selected from a group consisting of pillow, cushion, toy, mattress, insoles and lining of shoes;
preparing an starting material by mixing 1 to 70 wt% of the first hydrophilic PU prepolymer with 1 to 50 wt% of the second hydrophilic PU prepolymer, 1 to 50 wt% of an acrylic emulsion polymer, water and a surfactant under a temperature between 5 and 50 degrees Celsius;
pouring the starting material into the mold at a temperature between 30 and 50 degrees Celsius to proceed with foaming process for about 5 to 10 minutes; wherein the weight of the first hydrophilic PU prepolymer is between 33.3% and 66.7% of that of the starting material;
taking off a shaped foam from the mold; and
heating the shaped foam in an oven to dehydrate the foam.

**15.** The method as claimed in claim 14, wherein the weight of the first hydrophilic PU prepolymer is substantially 50% of that of the starting material.

**16.** The method as claimed in claim 14, wherein the heating temperature in the oven is between 50 and 100 degrees Celsius.

**17.** The method as claimed in claim 14, wherein the starting material further comprises no more than 20 wt% of a micro encapsulated material.

**18.** The method as claimed in claim 14, wherein the starting material further comprises an amine catalyst.

**19.** An application of the modified hydrophilic PU memory foam as claimed in claim 1 for producing a product selected from a group consisting of pillow, cushion, mattress, toy, insoles and lining of shoes.
